# EUROPÄISCHE PATENTSCHRIFT

(11) **EP 3 526 882 B1**
(45) Veröffentlichungstag und Bekanntmachung des Hinweises auf die Patenterteilung: **16.03.2022**
(21) Anmeldenummer: 17784915.5
(22) Anmeldetag: 04.10.2017
(51) Int. Cl.: H02K 1/27, H02K 1/30, H02K 15/03

(54) **ELEKTRISCHER ANTRIEBSMOTOR**
ELECTRIC DRIVE MOTOR
MOTEUR D'ENTRAÎNEMENT ÉLECTRIQUE

(30) Priorität: 13.10.2016 DE 102016219974
(43) Veröffentlichungstag der Anmeldung: 21.08.2019
(73) Patentinhaber: BSH Hausgeräte GmbH, 81739 München (DE)
(72) Erfinder: IVANAK, Martin, 04012 Kosice (SK); KALAVSKY, Michal, 04023 Kosice (SK)
(86) Internationale Anmeldenummer: PCT/EP2017/075180
(87) Internationale Veröffentlichungsnummer: WO 2018/069104

(56) Entgegenhaltungen:
- WO-A1-99/38242
- WO-A1-2011/090394
- DE-A1-102012 221 422
- DE-A1-102015 014 628

## Beschreibung

Die Erfindung betrifft einen elektrischen Antriebsmotor, aufweisend einen Stator mit Polschuhen und wenigstens einer elektrisch ansteuerbaren Statorwicklung, und einen im Feld der Statorwicklung unter Belassen eines Ringspaltes drehantreibbar gelagerten Permanentmagnetenrotor, der eine Motorwelle und einen auf der Motorwelle sitzenden, in einem als Spritzgussteil hergestellten Magnetenträger aufweist, an dem mehrere separate Permanentmagnete über einen Umfang verteilt angeordnet sind. Die Erfindung betrifft außerdem ein Haushaltsgerät mit einem solchen elektrischen Antriebsmotor.

Die EP 2 908 407 A2 beschreibt einen elektrischer Antriebsmotor für eine Pumpe, aufweisend eine elektrisch ansteuerbare Statorwicklung und einen im Feld der Statorwicklung unter Belassen eines Ringspaltes drehantreibbar gelagerten Rotor, der eine Motorwelle, einen auf der Motorwelle sitzenden Magnetträger und mehrere um wenigstens eine Mantelfläche des Magnetträgers verteilt angeordnete Permanentmagnete aufweist, die jeweils wenigstens eine Außenoberfläche aufweisen und die mittels eines durch Umspritzen des Magnetträgers hergestellten Kunststoffkörpers an dem Magnetträger befestigt sind, wobei die Permanentmagnete an ihren dem Ringspalt zugewandten Außenoberflächen durch den Kunststoffkörper derart form- und/oder kraftschlüssig gehalten sind, dass zumindest ein Teil dieser Außenoberflächen freiliegt.

Die WO 2011/090394 A1 beschreibt einen Rotor oder Stator für eine elektrodynamische Maschine, wobei der Rotor oder Stator eine im Wesentlichen kreisförmig angeordnete Reihe von Magneten und eine im Wesentlichen kreisförmig angeordnete Reihe von Gegenständen aus magnetischem Material aufweist, die in Kontakt mit den Magneten steht, wobei der Kontakt zwischen den Gegenständen aus magnetischem Material und den Magneten derart besteht, dass während des Einbettens des Rotors und des Stators in ein Kunststoffmaterial der Fluss des Kunststoffmaterials während des Einbettens nicht über den Kontaktbereich zwischen den Magneten und den Gegenständen aus magnetischem Material eindringt.

Die Aufgabe der Erfindung ist es, einen elektrischen Antriebsmotor zu schaffen, dessen Permanentmagnetenrotor verbessert ist.

Die Aufgabe der Erfindung wird gelöst durch einen elektrischen Antriebsmotor, aufweisend einen Stator mit Polschuhen und wenigstens einer elektrisch ansteuerbaren Statorwicklung, und einen im Feld der Statorwicklung unter Belassen eines Ringspaltes drehantreibbar gelagerten Permanentmagnetenrotor, der eine Motorwelle und einen auf der Motorwelle sitzenden, in einem als Spritzgussteil hergestellten Magnetenträger aufweist, an dem mehrere separate Permanentmagnete über einen Umfang verteilt angeordnet sind, wobei der Permanentmagnetenrotor eine Spannvorrichtung aufweist, die ausgebildet ist, zum Drücken der mehreren Permanentmagnete in radialen Richtungen nach außen gegen eine Innenwand einer Kavität einer Spritzgießform des Magnetenträgers, während des Spritzgießens des Magnetenträgers und die wenigstens zwei Teilschalen aufweist, die in Umfangsrichtung aneinandergesetzt sich zu einem zweiteiligen oder mehrteiligen Ringkörper ergänzen, der eine äußere Mantelwand bildet, an der die mehreren Permanentmagnete bündig anliegen, wobei die wenigstens zwei Teilschalen gegeneinander axial verstellbar ausgebildet sind, derart, dass bei einem axialen Verstellen mindestens einer der wenigstens zwei Teilschalen alle Teilschalen in radialen Richtungen nach außen bewegt werden und dadurch die mehreren Permanentmagnete in radialen Richtungen nach außen gegen die Innenwand der Kavität der Spritzgießform des Magnetenträgers gedrückt werden können.

Der elektrische Antriebsmotor kann insbesondere einen feststehenden Außenstator und einen drehbar gelagerten Innenrotor aufweisen. Der Permanentmagnetenrotor weist mehrere Pole, insbesondere vier, sechs, acht, zehn oder zwölf Pole auf. Jeder Permanentmagnet des Permanentmagnetenrotors kann separat im Magnetträger angeordnet sein und darin insbesondere gegen Verrutschen und/oder Herausfallen fixiert sein. Der Magnetträger kann insbesondere dadurch hergestellt werden, dass die einzelnen Permanentmagnete und die Motorwelle in eine Spritzgießform eingesetzt, darin lagerichtig positioniert und von einem Kunststoffwerkstoff, insbesondere einem Thermoplast umspritzt werden. Der Magnetträger entsteht in solchen Ausführungsformen insoweit durch die eingespritzte und ausgehärtete Kunststoffmasse. Die Gestalt des Magnetträgers wird dabei durch die Form der Kavität in der Spritzgießform vorgegeben.

Generell sind alle Permanentmagnete des Permanentmagnetenrotors vorzugsweise identisch ausgebildet. Jeder Permanentmagnet kann insbesondere eine kreisringsektorförmige Gestalt aufweisen. Die Permanentmagnete können über den Umfang des Permanentmagnetenrotors gleichmäßig verteilt angeordnet sein. Insoweit können sich die über den Umfang des Permanentmagnetenrotors gleichmäßig verteilt angeordneten Permanentmagnete, abgesehen von geringfügigen Spalten, zu einem umlaufenden, mehrstückig zusammengesetzten Magnetring ergänzen. Jeder Permanentmagnet alleine betrachtet, ist vorzugsweise einstückig ausgebildet. Die Permanentmagnete können insbesondere aus hartmagnetischen Ferriten hergestellt sein.

Üblicherweise werden an Permanentmagnetenrotoren eine der Polzahl oder der Polpaarzahl entsprechende Anzahl von einzelnen Permanentmagnete verwendet, wobei jeder Permanentmagnet genau einen einzigen Nordpol und einen einzigen Südpol aufweist. Alternativ können Permanentmagnetrotoren auch mehrere kreisringförmige Permanentmagneten aufweisen, die mit mehr als einem einzigen Nordpol und einem einzigen Südpol magnetisiert sein. So können die Permanentmagnete beispielsweise jeweils zwei Nordpole und zwei Südpole aufweisen.

Der Permanentmagnetenrotor kann jedoch beispielsweise auch mehrere Permanentmagnete aufweisen, von denen jeder Permanentmagnet an seiner konvexen Magnetaußenoberfläche zumindest einen einzigen magnetischen Südpol und einen einzigen magnetischem Nordpol aufweist. Jeder Permanentmagnet kann prinzipiell jedoch auch zwei oder mehr magnetische Südpole aufweisen. Jeder Permanentmagnet kann demgemäß dann prinzipiell auch zwei oder mehr magnetische Nordpole aufweisen. Insbesondere kann jeder Permanentmagnet an seiner konvexen Magnetaußenoberfläche jedoch genau einen einzigen magnetischen Südpol und genau einen einzigen magnetischen Nordpol aufweisen. An der dem magnetischen Südpol der konvexen Magnetaußenoberfläche örtlich näher gelegenen im Umfangsrichtung weisenden Stirnseite des Permanentmagneten weist dieser einen magnetischen Nordpol auf, der den Gegenpol zum magnetischen Südpol der konvexen Magnetaußenoberfläche bildet. Im selben Sinne weist der Permanentmagnet an der dem magnetischen Nordpol der konvexen Magnetaußenoberfläche örtlich näher gelegenen gegenüberliegenden Stirnseite einen magnetischen Südpol auf, der den Gegenpol zum magnetischen Nordpol der konvexen Magnetaußenoberfläche bildet.

Indem der Permanentmagnetenrotor eine Spannvorrichtung aufweist, die ausgebildet ist, zum Drücken der mehreren Permanentmagnete in radialen Richtungen nach außen gegen eine Innenwand einer Kavität einer Spritzgießform des Magnetenträgers, während des Spritzgießens des Magnetenträgers, kann einerseits ein Permanentmagnetenrotor mit einer sehr hohen Lagegenauigkeit der Permanentmagnete hergestellt werden und andererseits eine sehr effektive Herstellung des elektrischen Antriebsmotors erfolgen, da zum einen die Spannvorrichtung nach dem Spritzgießen nicht mehr entfernt werden muss und zum anderen die im Permanentmagnetenrotor auch nach dem Spritzgießvorgang verbleibende Spannvorrichtung während des Betriebs des elektrischen Antriebsmotors eine andere Funktion erfüllen kann, nämlich die Bildung eines die Magnetfelder der mehreren Permanentmagnete rückschließendes, magnetisches Joch.

Die Spannvorrichtung kann demgemäß ein die Magnetfelder der mehreren Permanentmagnete rückschließendes, magnetisches Joch bilden.

Die Spannvorrichtung kann insbesondere dadurch eine sehr hohen Lagegenauigkeit der Permanentmagnete bewirken, dass die Spannvorrichtung alle in der Kavität der Spritzgießform vorhandenen Permanentmagnete gegen die Innenwand der Kavität der Spritzgießform drückt und dort festhält. So ist sichergestellt, dass alle Magnetaußenoberflächen der Permanentmagnete auf genau demselben Umfang liegen, und gegenüber diesem vorgegebenen Kreiszylindermantel der Kavität keine verdrehte oder verkantete Lage aufweisen. So wird ein Permanentmagnetenrotor erhalten mit einem durch Spritzgießen erhaltenen Magnetenträger, in dem die einzelnen Permanentmagnete durch das Umspritzen in ihren jeweiligen Positionen und Lagen eindeutig festgelegt und durch das umschmolzene Kunststoffmaterial befestigt sind. So weisen die Permanentmagnete dadurch besonders lagegenaue Positionen und Orientierungen relativ zur Motorwelle auf, was zu einem besonders gleichmäßigem magnetischen Feld und zu einer guten Wuchtung des Permanentmagnetenrotors führt. Andererseits kann durch die besonders genaue Lage der Magnetaußenoberflächen der Permanentmagnete ein besonders formgenauer und insbesondere sehr schmaler Ringspalt zwischen dem Permanentmagnetenrotor und dem Stator des elektrischen Antriebsmotors realisiert werden, was den Wirkungsgrad des elektrischen Antriebsmotors verbessern kann. Dabei können die Magnetaußenoberflächen der Permanentmagnete zumindest weitgehend oder sogar vollständig frei von Spritzmaterial des Magnetenträgers sein und unmittelbar den Ringspalt begrenzen, d.h. der Ringspalt wird innenumfangsseitig von den äußeren Mantelwände der Permanentmagnete gebildet. Im Falle des Nassläufermotors kann der elektrische Antriebsmotor ausgebildet sein, dass der Ringspalt von einer Flüssigkeit, wie beispielsweise Wasser oder einer Spülflotte einer Geschirrspülmaschine durchflossen ist. In einem solchen Falle werden die Magnetaußenoberflächen der Permanentmagnete unmittelbar von der Flüssigkeit, wie beispielsweise Wasser oder der Spülflotte einer Geschirrspülmaschine benetzt.

Die Spannvorrichtung weist wenigstens zwei Teilschalen auf, die in Umfangsrichtung aneinandergesetzt sich zu einem zweiteiligen oder mehrteiligen Ringkörper ergänzen, der eine äußere Mantelwand bildet, an der die mehreren Permanentmagnete bündig anliegen.

Die Permanentmagnete liegen dabei mit ihren Magnetinnenoberflächen unmittelbar an der äußeren Mantelwand des durch die Teilschalen gebildeten Ringkörper an. Die äußere Mantelwand des Ringkörpers gibt insoweit die genauen Positionen und Lagen aller Permanentmagnete vor. Die Spannvorrichtung selbst kann federelastische Eigenschaften aufweisen, um die mehreren Permanentmagnete während des Spritzgießens des Magnetenträgers in radialen Richtungen nach außen gegen die Innenwand der Kavität der Spritzgießform des Magnetenträgers drücken zu können.

Um die mehreren Permanentmagnete in radialen Richtungen nach außen gegen die Innenwand der Kavität der Spritzgießform des Magnetenträgers während des Spritzgießens des Magnetenträgers zu drücken, sind die wenigstens zwei Teilschalen erfindungsgemäß gegeneinander axial verstellbar ausgebildet, derart, dass bei einem axialen Verstellen mindestens einer der wenigstens zwei Teilschalen alle Teilschalen in radialen Richtungen nach außen bewegt werden und dadurch die mehreren Permanentmagnete in radialen Richtungen nach außen gegen die Innenwand der Kavität der Spritzgießform des Magnetenträgers gedrückt werden können.

Indem die die wenigstens zwei Teilschalen gegeneinander axial verstellbar ausgebildet sind, kann eine besonders einfache und platzsparende Spannvorrichtung geschaffen werden. Bei einem solchen axialen Verstellen mindestens einer der wenigstens zwei Teilschalen alle Teilschalen, werden alle Teilschalen in radialen Richtungen nach außen bewegt, so dass die Permanentmagnete in radialen Richtungen nach außen gegen die Innenwand der Kavität der Spritzgießform des Magnetenträgers gedrückt werden können.

Die Spannvorrichtung kann dazu Verstellkeile aufweisen. Dabei können wenigstens zwei Verstellkörper je eine schräge Fläche aufweisen, wobei die beiden schrägen Flächen aneinander liegen. Wird nun ein Verstellkörper versetzt wird der andere Verstellkörper aufgrund der beiden aneinander liegenden schrägen Fläche in einem rechten Winkel dazu verschoben. Die Verstellkörper können durch die Teilschalen selbst gebildet werden. Die schrägen Flächen können durch in Umfangsrichtung weisende Stirnwände der Teilschalen gebildet werden.

Jede Teilschale kann demgemäß eine sich um eine axiale Symmetrielinie kreisbogenförmig erstreckende Grundform aufweisen, mit einer kreisringsektorförmigen, konvexen Außenmantelwand, einer kreisringsektorförmigen, konkaven Innenmantelwand und einer in Umfangsrichtung in Drehrichtung des Permanentmagnetenrotors weisenden ersten Stirnwand, sowie einer in Umfangsrichtung entgegen der Drehrichtung des Permanentmagnetenrotors weisenden zweiten Stirnwand, wobei die erste Stirnwand und die zweite Stirnwand jeweils in einer Ebene liegen, die in Richtung der axialen Symmetrielinie, welche die Drehachse des Permanentmagnetenrotors bildet, um einen senkrecht zur axialen Symmetrielinie geschwenkten Winkel schrägt verlaufend angeordnet ist.

Anders ausgedrückt ist die erste Stirnwand also gegenüber der axialen Richtung angeschrägt. Auch die zweite Stirnwand ist gegenüber der axialen Richtung angeschrägt. Jeweils die erste Stirnwand einer Teilschale liegt dabei an der zweiten Stirnwand der anderen Teilschale flächig auf. Wird nun die eine Teilschale in axialer Richtung bezüglich der anderen Teilschale verstellt, verschieben sich die beiden in Umfangsrichtung weisenden Stirnwände benachbarter Teilschalen, so dass insoweit der Durchmesser der aneinandergesetzten, sich zu einem Ringkörper ergänzenden Teilschalen sich erweitert. Durch die Erweiterung des Durchmessers des aus den Teilschalen zusammengesetzten Ringkörpers werden die Permanentmagnete während des Spritzgießens des Magnetenträgers in radialen Richtungen nach außen gegen die Innenwand der Kavität der Spritzgießform des Magnetenträgers gedrückt.

Der Winkel kann vorzugsweise zwischen 1 Grad und 20 Grad, insbesondere zumindest im Wesentlichen 12 Grad betragen.

Die Spannvorrichtung oder jede Teilschale kann aus einem ferritischen Chromstahl hergestellt sein. Der ferritische Chromstahl kann insbesondere ein Chromstahl der Sorte X6Cr17 (AISI 430) sein.

Jeder Permanentmagnet kann eine radial nach außen gewandte konvexe Magnetaußenoberfläche aufweisen und eine gegenüberliegende, radial nach innen gewandte konkave Magnetinnenoberfläche aufweisen, an welcher die Spannvorrichtung oder die Teilschalen mit ihren äußeren Mantelwänden bündig anliegen.

Ein Gruppieren von mehreren Permanentmagneten kann beispielsweise im Falle von insgesamt drei einstückigen Permanentmagneten dadurch erfolgen, dass drei Permanentmagnete, die jeweils eine über 120 Grad laufende Bogenlänge aufweisen, zu einem über 360 Grad laufenden Gesamtkreisring zusammengruppiert werden. Im Falle von insgesamt vier einstückigen Permanentmagneten kann ein Gruppieren dadurch erfolgen, dass vier Permanentmagnete, die jeweils eine über 90 Grad laufende Bogenlänge aufweisen, zu einem über 360 Grad laufenden Gesamtkreisring zusammengruppiert werden. Im Falle von insgesamt fünf einstückigen Permanentmagneten kann ein Gruppieren dadurch erfolgen, dass fünf Permanentmagnete, die jeweils eine über 72 Grad laufende Bogenlänge aufweisen, zu einem über 360 Grad laufenden Gesamtkreisring zusammengruppiert werden u.s.w.. Von diesen Winkelwerten kann im Rahmen der Erfindung auch geringfügig abgewichen werden, beispielsweise um zwischen den Stirnseiten zweier benachbarter Permanentmagnete bewusst einen geringfügigen Spalt zu belassen. Einen Spalt zwischen den Stirnseiten zweier benachbarter Permanentmagnete zu belassen kann sinnvoll sein, beispielsweise um herstellungsbedingte Toleranzen in den Abmaßen der einzelnen Permanentmagnete ausgleichen zu können oder beispielsweise um durch die Spalte Spielraum zu haben, damit sich die einzelnen Permanentmagnete während des Betriebs an Temperaturänderungen anpassen können, ohne dass Verspannungen in den Permanentmagneten auftreten.

Die radial nach außen gewandte konvexe Magnetoberfläche und die radial nach innen gewandte konkave Magnetinnenoberfläche können jeweils eine kreiszylindrische Mantelwand des Permanentmagneten sein. Die radial nach außen gewandte konvexe Magnetoberfläche und die radial nach innen gewandte konkave Magnetinnenoberfläche können in einem Abstand parallel zueinander ausgerichtet angeordnet sein und somit kreisringsektorförmige Permanentmagnete konstanter Wanddicke bilden.

Jeder Permanentmagnet kann aus einem gepressten und anschließend gesinterten Magnetpulver hergestellt sein, das während der Herstellung des Permanentmagneten einem Magnetisierungsfeld ausgesetzt ist, bei dem die aus dem magnetischen Nordpol an der konvexen Magnetaußenoberfläche des zu magnetisierenden Permanentmagnets austretenden und/oder die in den magnetischen Südpol an der konvexen Magnetaußenoberfläche des zu magnetisierenden Permanentmagnets eintretenden Magnetfeldlinien sich jeweils in einem virtuellen Fokus verdichten, der auf einem Magnetisierungsradius außerhalb des Außenkonturradius der konvexen Magnetaußenoberfläche des Permanentmagnets liegt.

Werden die Permanentmagnete aus einem gepressten und anschließend gesinterten Magnetpulver hergestellt, so ist es besonders zweckmäßig, wenn jeder einzelne, einstückige Permanentmagnet eine Bogenlänge aufweist, die um weniger als 180 Grad läuft, also vorzugsweise um 120 Grad, 90 Grad, 72 Grad oder weniger läuft. Dadurch wird sichergestellt, dass bei einem Pressvorgang an allen Stellen des Permanentmagneten ausreichend hohe Presskräfte in das Magnetpulver eingeleitet werden können.

Jeder Permanentmagnet kann eine radial nach außen gewandte konvexe Magnetaußenoberfläche aufweisen, welche zumindest einen Teil der Mantelwand des Permanentmagnetenrotors bildet, die den Ringspalt des Antriebsmotors von innen unmittelbar begrenzt.

Durch die mittels der erfindungsgemäßen Lösungen geschaffenen besonders genauen Lage der Magnetaußenoberflächen der Permanentmagnete, kann ein besonders formgenauer und insbesondere sehr schmaler Ringspalt zwischen dem Permanentmagnetenrotor und dem Stator des elektrischen Antriebsmotors realisiert werden, was den Wirkungsgrad des elektrischen Antriebsmotors verbessern kann. Dabei können die Magnetaußenoberflächen der Permanentmagnete frei von Spritzmaterial des Magnetenträgers sein und unmittelbar den Ringspalt begrenzen, d.h. der Ringspalt wird innenumfangsseitig von den äußeren Mantelwände der Permanentmagnete gebildet. Im Falle des Nassläufermotors kann der elektrische Antriebsmotor ausgebildet sein, dass der Ringspalt von einer Flüssigkeit, wie beispielsweise Wasser oder einer Spülflotte einer Geschirrspülmaschine durchflossen ist. In einem solchen Falle werden die Magnetaußenoberflächen der Permanentmagnete unmittelbar von der Flüssigkeit, wie beispielsweise Wasser oder der Spülflotte einer Geschirrspülmaschine benetzt.

Jeder Permanentmagnet kann in allen beschriebenen Ausführungsvarianten an seiner jeweiligen konvexen Magnetaußenoberfläche eine sich in axialer Richtung längserstreckende Nut aufweisen.

Die sich in axialer Richtung längserstreckende Nut kann die jeweilige konvexe Magnetoberfläche eines Permanentmagnets insoweit in zwei gleichgroße Teiloberflächen abgrenzen. An jeder dieser beiden Teiloberflächen kann jeweils einer von zwei magnetischen Polen der konvexen Magnetaußenoberfläche angeordnet sein. Die Nut kann insoweit zwischen den beiden magnetischen Pole der konvexen Magnetaußenoberfläche entlang verlaufen und den einen magnetischen Pol der konvexen Magnetaußenoberfläche von dem anderen magnetischen Pol der konvexen Magnetoberfläche trennen.

Die sich in axialer Richtung längserstreckende Nut kann generell, d.h. unabhängig von der Art der Magnetisierung der Permanentmagnete, eine andere bzw. alternative Funktion aufweisen. So kann die Nut einen Kanal bilden, in den plastifizierte Kunststoffmasse während der Herstellung des Magnetträgers einfließen kann, wenn die Permanentmagnet und die Motorwelle in eine Spritzgießform eingesetzt sind, um den Magnetträger durch Spritzgießen herzustellen. Die Permanentmagnete und die Motorwelle werden dabei von der Kunststoffmasse umspritzt und der Magnetträger gebildet. Im ausgehärteten Zustand der Kunststoffmasse werden in den Nuten folglich Stege aus Kunststoff gebildet, welche im Betrieb des Antriebsmotors die Permanentmagnete gegen die aufgrund der Drehung des Permanentmagnetenrotors auf die Permanentmagnete wirkende Fliehkraft mechanisch stützen und somit die Permanentmagnete auf ihrem Umfang halten.

Generell können ein oder mehrere Kanten jeden Permanentmagnets mit einer Fase versehen sein.

Die Fasen können an einzelnen, mehreren oder allen Kanten des jeweiligen Permanentmagnets vorhanden sein. Jede Fase kann an vorzugsweise den rechtwinkeligen Kanten des Permanentmagnets vorhanden sein. Jede Fase kann insbesondere durch eine um 45 Grad angestellte Winkellage zu einer der Anschlussflächen der Kante gebildet werden. Die Fasen können insbesondere bereits bei der Herstellung der Permanentmagnete durch Pressen und Sintern vom Magnetpulver eingebracht werden. Sie müssen insbesondere nicht erst nachträglich durch Abschleifen bzw. Anfasen der rechtwinkeligen Kanten des Permanentmagnets hergestellt werden.

Die Aufgabe wird außerdem gelöst durch ein Haushaltsgerät, insbesondere eine Geschirrspülmaschine, eine Waschmaschine, einen Trockner, eine Dunstabzugshaube, oder eine Haushaltsgerätepumpe, insbesondere als Komponente einer der genannten Haushaltsgeräte, aufweisend einen elektrischen Antriebsmotor nach einer oder mehreren der beschriebenen und/oder dargestellten Ausführungsformen.

Konkrete Ausführungsbeispiele von erfindungsgemäßen Komponenten von elektrischen Antriebsmotoren sind in der nachfolgenden Beschreibung unter Bezugnahme auf die beigefügten Figuren näher erläutert. Bestimmte einzelne Merkmale dieser Ausführungsbeispiele können unabhängig davon, in welchem konkreten Zusammenhang sie erwähnt sind, gegebenenfalls auch einzeln oder in anderen als den dargestellten Kombinationen betrachtet, allgemeine Merkmale der Erfindung darstellen.

Es zeigen:
- Fig. 1: eine perspektivische Darstellung einer beispielhaften Haushaltsgerätepumpe einer Geschirrspülmaschine, die einen elektrischen Antriebsmotor aufweist;
- Fig. 2: eine Schnittdarstellung der Haushaltsgerätepumpe gemäß Fig. 1 und des elektrischen Antriebsmotors;
- Fig. 3: eine explodierte Darstellung eines erfindungsgemäßen Permanentmagnetenrotors des elektrischen Antriebsmotors gemäß Fig. 2;
- Fig. 4: eine schematische Schnittdarstellung der in die Kavität der Spritzgießform eingesetzten Permanentmagnete, bei der die Spannvorrichtung aus zwei Teilschalen (Halbschalen) gebildet wird;
- Fig. 5: eine perspektivische Darstellung des Permanentmagnetenrotors gemäß Fig. 3 in der Zusammenstellung;
- Fig. 6: eine stirnseitige Draufsicht auf einen beispielhaften Permanentmagneten; und
- Fig. 7: eine Ansicht auf die konvexe Magnetoberfläche eines beispielhaften Permanentmagneten.

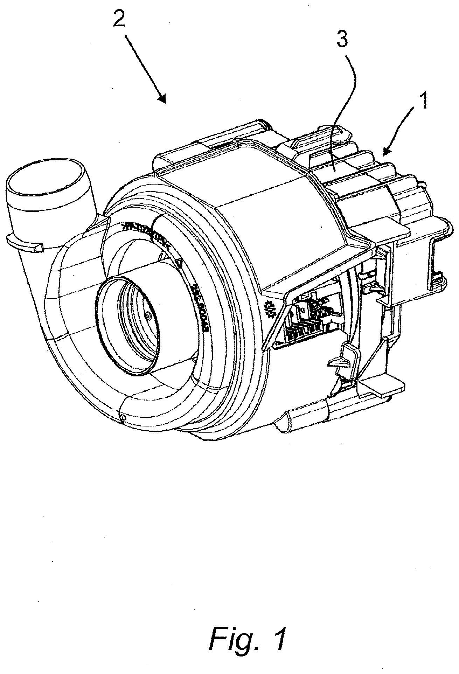

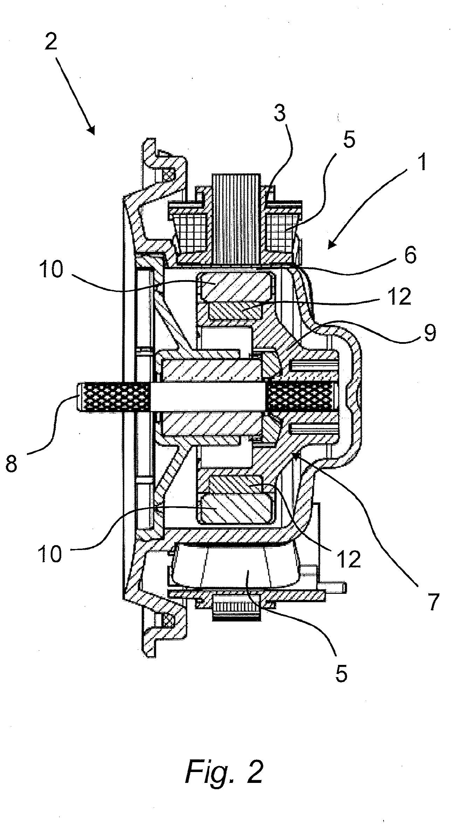

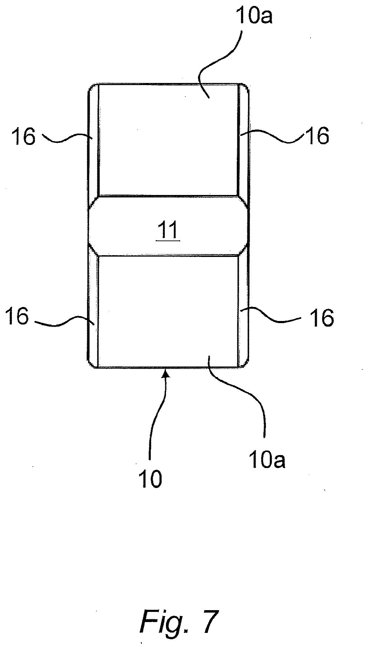

Die Fig. 1 bis Fig. 7 zeigen Bauteile eines beispielhaften elektrischen Antriebsmotors 1 einer Haushaltsgerätepumpe 2, wie insbesondere in Fig. 1 und Fig. 2 aufgezeigt, einer beispielhaften Geschirrspülmaschine, aufweisend einen Stator 3 mit Polschuhen und wenigstens einer elektrisch ansteuerbaren Statorwicklung 5, und einen im Feld der Statorwicklung 5 unter Belassen eines Ringspaltes 6 drehantreibbar gelagerten Permanentmagnetenrotor 7.

Der Permanentmagnetenrotor 7 weist eine Motorwelle 8 und einen auf der Motorwelle 8 sitzenden, in einem als Spritzgussteil hergestellten Magnetenträger 9 auf, an dem mehrere separate Permanentmagnete 10 über einen Umfang verteilt angeordnet sind.

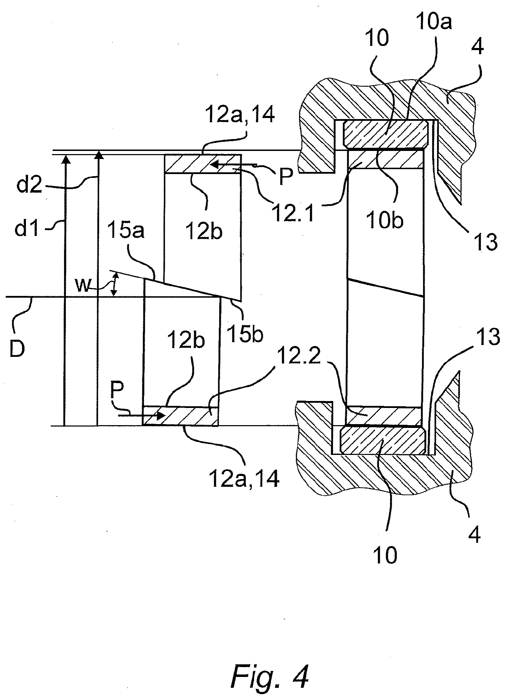

Der Magnetträger 9 wird insbesondere dadurch hergestellt, dass die einzelnen Permanentmagnete 10 und die Motorwelle 8 in eine Spritzgießform 4, wie beispielsweise in Fig. 4 aufgezeigt, eingesetzt, darin lagerichtig positioniert und von einem Kunststoffwerkstoff, insbesondere einem Thermoplast umspritzt werden. Der Magnetträger 9 entsteht in solchen Ausführungsformen insoweit durch die eingespritzte und ausgehärtete Kunststoffmasse. Die Gestalt des Magnetträgers 9 wird dabei durch die Form der Kavität in der Spritzgießform 4 vorgegeben.

Im Falle des vorliegenden Ausführungsbeispiels weist der Permanentmagnetenrotor 7 eine Spannvorrichtung 12 auf, die ausgebildet ist, zum Drücken der mehreren Permanentmagnete 10 in radialen Richtungen nach außen gegen eine Innenwand 13 (Fig. 4) einer Kavität der Spritzgießform 4 des Magnetenträgers 9, während des Spritzgießens des Magnetenträgers 9.

Die Spannvorrichtung 12 weist im Falle des vorliegenden Ausführungsbeispiels genau zwei Teilschalen 12.1 und 12.2 auf, die somit zwei Halbschalen bilden und die, in Umfangsrichtung aneinandergesetzt, sich zu einem zweiteiligen Ringkörper ergänzen, der eine äußere Mantelwand 14 bildet, an der die mehreren Permanentmagnete 10 bündig anliegen, wie dies insbesondere in Fig. 4 dargestellt ist.

Die Spannvorrichtung 12 bewirkt insbesondere dadurch einer sehr hohen Lagegenauigkeit der Permanentmagnete 10, dass die Spannvorrichtung 12 alle in der Kavität der Spritzgießform 4 vorhandenen Permanentmagnete 10 gegen die Innenwand 13 der Kavität der Spritzgießform drückt und dort festhält. So ist sichergestellt, dass alle Magnetaußenoberflächen 10a der Permanentmagnete 10 auf genau demselben Umfang liegen, und gegenüber diesem vorgegebenen Kreiszylindermantel der Kavität keine verdrehte oder verkantete Lage aufweisen. So wird ein Permanentmagnetenrotor 7 erhalten mit einem durch Spritzgießen erhaltenen Magnetenträger 9, in dem die einzelnen Permanentmagnete 10 durch das Umspritzen in ihren jeweiligen Positionen und Lagen eindeutig festgelegt und befestigt sind. So weisen die Permanentmagnete 10 dadurch besonders lagegenaue Positionen und Lagen relativ zur Motorwelle 8 auf, was zu einer besonders guten Wuchtung des Permanentmagnetenrotors 7 führt. Andererseits kann durch die besonders genaue Lage der Magnetaußenoberflächen 10a der Permanentmagnete 10 ein besonders formgenauer und insbesondere sehr schmaler Ringspalt 6 zwischen dem Permanentmagnetenrotor 7 und dem Stator 3 des elektrischen Antriebsmotors 1 realisiert werden, was den Wirkungsgrad des elektrischen Antriebsmotors 1 verbessern kann.

Dabei sind die Magnetaußenoberflächen 10a der Permanentmagnete 10 frei von Spritzmaterial des Magnetenträgers 9 und begrenzen unmittelbar den Ringspalt 6, d.h. der Ringspalt 6 wird innenumfangsseitig von den Magnetaußenoberflächen 10a der Permanentmagnete 10 gebildet. Im Falle des Nassläufermotors kann der elektrische Antriebsmotor 1 ausgebildet sein, dass der Ringspalt 6 von einer Flüssigkeit, wie beispielsweise Wasser oder einer Spülflotte einer Geschirrspülmaschine durchflossen ist. In einem solchen Falle werden die Magnetaußenoberflächen 10a der Permanentmagnete 10 unmittelbar von der Flüssigkeit, wie beispielsweise Wasser oder der Spülflotte einer Geschirrspülmaschine benetzt.

Jede Teilschale 12.1 und 12.2 weist eine sich um eine axiale Symmetrielinie kreisbogenförmig erstreckende Grundform auf, mit einer kreisringsektorförmigen, konvexen Außenmantelwand 12a, einer kreisringsektorförmigen, konkaven Innenmantelwand 12b und einer in Umfangsrichtung in Drehrichtung Permanentmagnetenrotor 7 weisende erste Stirnwand 15a, sowie einer in Umfangsrichtung entgegen der Drehrichtung des Permanentmagnetenrotor 7 weisende zweite Stirnwand 15b, wobei die erste Stirnwand 15a und die zweite Stirnwand 15b jeweils in einer Ebene liegen, die in Richtung der axialen Symmetrielinie, welche die Drehachse D des Permanentmagnetenrotors 7 bildet, um einen senkrecht zur axialen Symmetrielinie geschwenkten Winkel W schrägt verlaufend angeordnet ist (Fig. 4).

Die Spannvorrichtung 12, d.h. die Teilschalen 12.1 und 12.2 weisen anders ausgedrückt insoweit Verstellkeile auf. Dabei können wenigstens zwei Verstellkörper je eine schräge Fläche aufweisen, wobei die beiden schrägen Flächen aneinander liegen. Wird nun ein Verstellkörper versetzt wird der andere Verstellkörper aufgrund der beiden aneinander liegenden schrägen Fläche in einem rechten Winkel dazu verschoben. Die Verstellkörper können wie im Falle des vorliegenden Ausführungsbeispiels durch die Teilschalen 12.1 und 12.2 selbst gebildet werden. Die schrägen Flächen können durch die in Umfangsrichtung weisenden Stirnwände 15a und 15b der Teilschalen 12.1 und 12.2 gebildet werden.

Der Winkel W liegt zwischen 1 Grad und 20 Grad, und beträgt im Falle des vorliegenden Ausführungsbeispiels ca. 12 Grad.

Die zwei Teilschalen 12.1 und 12.2 sind, wie in Fig. 4 aufgezeigt, gegeneinander axial verstellbar ausgebildet, derart, dass bei einem axialen Verstellen mindestens eine der zwei Teilschalen 12.1 und 12.2 bzw. beide Teilschalen12.1 und 12.2 in radialen Richtungen nach außen bewegt werden und dadurch die mehreren Permanentmagnete 10 in radialen Richtungen nach außen gegen die Innenwand 13 der Kavität der Spritzgießform 4 des Magnetenträgers 9 gedrückt werden. Durch das axiale Verschieben gegeneinander in Pfeilrichtungen P vergrößert sich insoweit der Durchmesser des von den Teilschalen 12.1 und 12.2 gebildeten Ringkörpers von einem kleineren Durchmesser d1 zu einem geringfügig größeren Durchmesser d2.

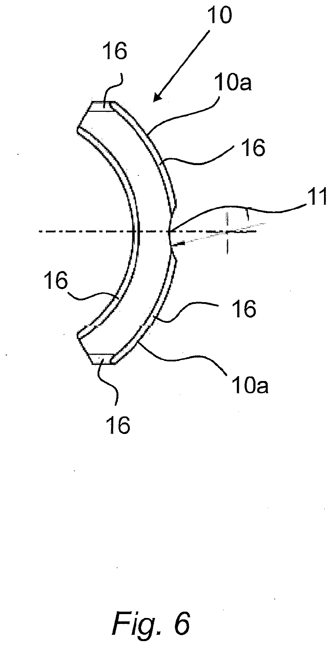

Jeder Permanentmagnet 10 weist eine radial nach außen gewandte konvexe Magnetaußenoberfläche 10a auf und eine gegenüberliegende, radial nach innen gewandte konkave Magnetinnenoberfläche 10b (Fig. 6) auf, an welcher die Spannvorrichtung 12 d.h. die Teilschalen 12.1 und 12.2 mit ihren äußeren Mantelwänden 14 bündig anliegen (Fig. 4).

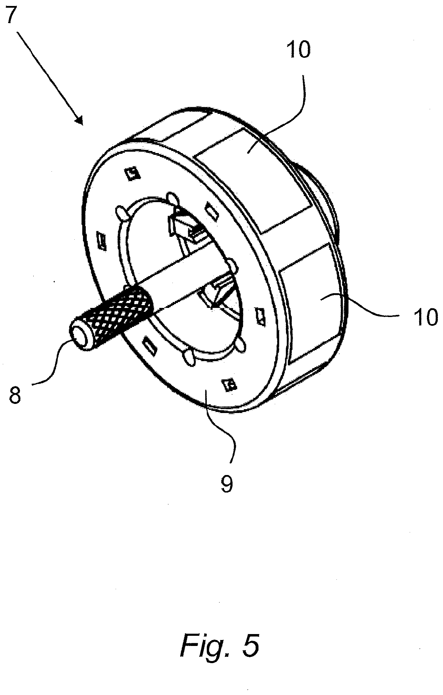

Jeder Permanentmagnet 10 weist insoweit eine radial nach außen gewandte konvexe Magnetaußenoberfläche 10a auf, welche wie insbesondere in Fig. 5 dargestellt ist, zumindest einen Teil der Mantelwand des Permanentmagnetenrotors 7 bildet, die den Ringspalt 6 des Antriebsmotors 1 (Fig. 2) von innen unmittelbar begrenzt.

Die Spannvorrichtung 12 bildet dabei außerdem ein die Magnetfelder der mehreren Permanentmagnete 10 rückschließendes, magnetisches Joch.

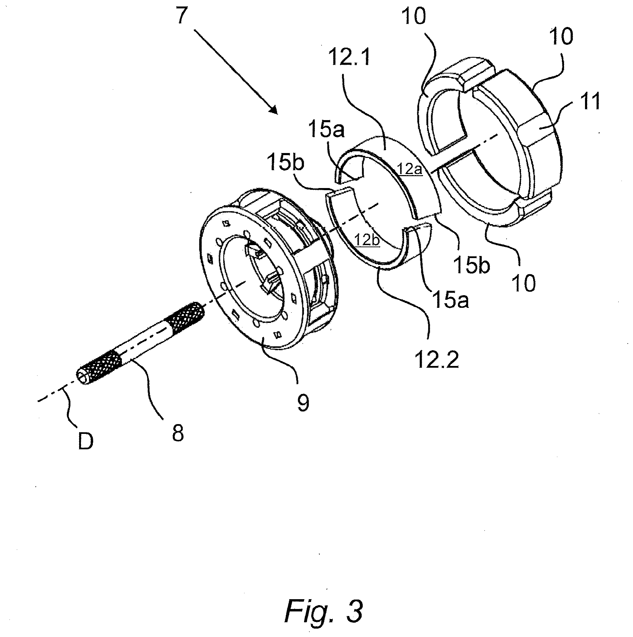

Der Permanentmagnetenrotor 7 weist, wie insbesondere in Fig. 3 in einer Explosionsdarstellung und in Fig. 4 im Zusammenbau gezeigt ist, eine Motorwelle 8 und einen auf der Motorwelle 8 sitzenden Magnetenträger 9 auf, an dem mehrere separate Permanentmagnete 10 über einen Umfang verteilt angeordnet sind.

Der Permanentmagnetenrotor 7 weist im Falle des vorliegenden Ausführungsbeispiels genau drei Permanentmagnete 10 auf, die an dem Magnetenträger 9 über den Umfang verteilt um jeweils 120 Grad versetzt zueinander angeordnet sind, wie dies insbesondere in Fig. 3 dargestellt ist..

Die Fig. 3 zeigt außerdem, wie im Falle des vorliegenden Ausführungsbeispiels jeder Permanentmagnet 10 an seiner jeweiligen konvexen Magnetaußenoberfläche 10a eine sich in axialer Richtung längserstreckende Nut 11 aufweist.

Darüber hinaus sind, wie in Fig. 3, 6 und Fig. 7 gezeigt, die Kanten jeden Permanentmagnets 10 mit Fasen 16 versehen.

Die radial nach außen gewandten konvexen Magnetoberflächen 10a und die radial nach innen gewandten konkaven Magnetinnenoberflächen 10b bilden im Falle des dargestellten Ausführungsbeispiels jeweils eine kreiszylindrische Mantelwand des Permanentmagneten 10. Die radial nach außen gewandte konvexe Magnetoberfläche 10a und die radial nach innen gewandte konkave Magnetinnenoberfläche 10b können wie dargestellt in einem Abstand parallel zueinander ausgerichtet angeordnet sein und somit kreisringsektorförmige Permanentmagnete 10 konstanter Wanddicke bilden.

## Patentansprüche

1. Elektrischer Antriebsmotor, aufweisend einen Stator (3) mit Polschuhen und wenigstens einer elektrisch ansteuerbaren Statorwicklung (5), und einen im Feld der Statorwicklung (5) unter Belassen eines Ringspaltes (6) drehantreibbar gelagerten Permanentmagnetenrotor (7), der eine Motorwelle (8) und einen auf der Motorwelle (8) sitzenden, in einem als Spritzgussteil hergestellten Magnetenträger (9) aufweist, an dem mehrere separate Permanentmagnete (10) über einen Umfang verteilt angeordnet sind, wobei der Permanentmagnetenrotor (7) eine Spannvorrichtung (12) aufweist, die ausgebildet ist, zum Drücken der mehreren Permanentmagnete (10) in radialen Richtungen nach außen gegen eine Innenwand (13) einer Kavität einer Spritzgießform (4) des Magnetenträgers (9), während des Spritzgießens des Magnetenträgers (9) und die wenigstens zwei Teilschalen (12.1, 12.2) aufweist, die in Umfangsrichtung aneinandergesetzt sich zu einem zweiteiligen oder mehrteiligen Ringkörper ergänzen, der eine äußere Mantelwand (14) bildet, an der die mehreren Permanentmagnete (10) bündig anliegen, wobei die wenigstens zwei Teilschalen (12.1, 12.2) gegeneinander axial verstellbar ausgebildet sind, derart, dass bei einem axialen Verstellen mindestens einer der wenigstens zwei Teilschalen (12.1, 12.2) alle Teilschalen (12.1, 12.2) in radialen Richtungen nach außen bewegt werden und dadurch die mehreren Permanentmagnete (10) in radialen Richtungen nach außen gegen die Innenwand (13) der Kavität der Spritzgießform (4) des Magnetenträgers (9) gedrückt werden können.

2. Elektrischer Antriebsmotor nach Anspruch 1, **dadurch gekennzeichnet, dass** die Spannvorrichtung (12) ein die Magnetfelder der mehreren Permanentmagnete (10) rückschließendes, magnetisches Joch bildet.

3. Elektrischer Antriebsmotor nach Anspruch 1 oder 2, **dadurch gekennzeichnet, dass** jede Teilschale (12.1, 12.2) eine sich um eine axiale Symmetrielinie kreisbogenförmig erstreckende Grundform aufweist, mit einer kreisringsektorförmigen, konvexen Außenmantelwand (12a), einer kreisringsektorförmigen, konkaven Innenmantelwand (12b) und einer in Umfangsrichtung in Drehrichtung des Permanentmagnetenrotors (7) weisenden ersten Stirnwand (15a) , sowie einer in Umfangsrichtung entgegen der Drehrichtung des Permanentmagnetenrotors (7) weisenden zweiten Stirnwand (15b), wobei die erste Stirnwand (15a) und die zweite Stirnwand (15b) jeweils in einer Ebene liegen, die in Richtung der axialen Symmetrielinie, welche die Drehachse (D) des Permanentmagnetenrotors (7) bildet, um einen senkrecht zur axialen Symmetrielinie geschwenkten Winkel (w) schrägt verlaufend angeordnet ist.

4. Elektrischer Antriebsmotor nach Anspruch 3, **dadurch gekennzeichnet, dass** der Winkel (w) zwischen 1 Grad und 20 Grad, insbesondere zumindest im Wesentlichen 12 Grad beträgt.

5. Elektrischer Antriebsmotor nach einem der Ansprüche 1 bis 4, **dadurch gekennzeichnet, dass** die Spannvorrichtung (12) oder jede Teilschale (12.1, 12.2) aus einem ferritischen Chromstahl hergestellt ist.

6. Elektrischer Antriebsmotor nach einem der Ansprüche 1 bis 5, **dadurch gekennzeichnet, dass** jeder Permanentmagnet (10) eine radial nach außen gewandte konvexe Magnetaußenoberfläche (10a) aufweist und eine gegenüberliegende, radial nach innen gewandte konkave Magnetinnenoberfläche (10b) aufweist, an welcher die Spannvorrichtung (12) oder die Teilschalen (12.1, 12.2) mit ihren äußeren Mantelwänden (14) bündig anliegen.

7. Elektrischer Antriebsmotor nach einem der Ansprüche 1 bis 6, **dadurch gekennzeichnet, dass** jeder Permanentmagnet (10) eine radial nach außen gewandte konvexe Magnetaußenoberfläche (10a) aufweist, welche zumindest einen Teil der Mantelwand (14) des Permanentmagnetenrotors (7) bildet, die den Ringspalt (6) des Antriebsmotors (1) von innen unmittelbar begrenzt.

8. Elektrischer Antriebsmotor nach einem der Ansprüche 1 bis 7, **dadurch gekennzeichnet, dass** jeder Permanentmagnet (10) an seiner jeweiligen konvexen Magnetaußenoberfläche (10a) eine sich in axialer Richtung längserstreckende Nut (11) aufweist.

9. Elektrischer Antriebsmotor nach einem der Ansprüche 1 bis 8, **dadurch gekennzeichnet, dass** ein oder mehrere Kanten jeden Permanentmagnets (10) mit einer Fase (16) versehen ist.

10. Haushaltsgerät, insbesondere Geschirrspülmaschine, Waschmaschine, Trockner Dunstabzugshaube oder Haushaltsgerätepumpe (2), aufweisend einen elektrischen Antriebsmotor (1) nach einem der Ansprüche 1 bis 9.

## Claims

1. Electric drive motor, having a stator (3) with pole shoes and at least one electrically actuatable stator winding (5), and having a permanent-magnet motor (7) which is mounted in a rotatably drivable manner in a field of the stator winding (5) such that an annular gap (6) is left and which has a motor shaft (8) and a magnet carrier (9) which sits on the motor shaft (8) and is produced in one piece as an injection-moulded part, a plurality of separate permanent magnets (13) being arranged on said magnet carrier in a manner distributed over the circumference, wherein the permanent-magnet rotor (7) has a tensioning device (12), which is embodied for pushing the number of permanent magnets (10) in radial directions outwards against an inner wall (13) of a cavity of an injection mould (4) of the magnet carrier (9) during the injection moulding of the magnet carrier (9) and which has at least two part shells (12.1, 12.2), which placed together in the circumferential direction, complement each other to form a two-part or multi-part annular body, which forms an outer curved surface wall (14), against which the number of permanent magnets (10) rest flush, wherein the at least two part shells (12.1, 12.2) are embodied so as to be axially adjustable in relation to one another, in such a way that, during an axial adjustment of at least one of the at least two part shells (12.1, 12.2), all part shells (12.1, 12.2) are moved outwards in radial directions and thereby the number of permanent magnets (10) can be pressed outwards in radial directions against the inner wall (13) of the cavity of the injection mould (4) of the magnet carrier (9).

2. Electric drive motor according to claim 1, **characterised in that** the tensioning device (12) forms a magnetic yoke providing a return path for the magnetic fields of the number of permanent magnets (10).

3. Electric drive motor according to claim 1 or 2, **characterised in that** each part shell (12.1, 12.2) has a basic shape extending in a circle arc shape about an axial symmetry line, with a circle sector-shaped, convex outer curved surface wall (12a), a circle sector-shaped, concave inner curved surface wall (12b) and a first end face wall (15a) pointing in the circumferential direction in the direction of rotation of the permanent-magnet rotor (7), as well as a second end face wall (15b) pointing in the circumferential direction against the direction of rotation of the permanent-magnet rotor (7), wherein the first end face wall (15a) and the second end face wall (15b) each lie in a plane that is arranged in the direction of the axial line of symmetry that forms the axis of rotation (D) of the permanent-magnet rotor (7), by a rotated angle (w) running angled at a right angle to the axial line of symmetry.

4. Electric drive motor according to claim 3, **characterised in that** the angle (w) amounts to between 1 degree and 20 degrees, at least to essentially 12 degrees.

5. Electric drive motor according to one of claims 1 to 4, **characterised in that** the tensioning device (12) or each part shell (12.1, 12.2) is produced from a ferritic chromium steel.

6. Electric drive motor according to one of claims 1 to 5, **characterised in that** each permanent magnet (10) has a convex magnet outer surface (10a) facing radially outwards and an opposite concave magnet inner surface (10b) facing radially inwards, against which the tensioning device (12) or the part shells (12.1, 12.2) rest flush with their outer curved surface walls (14).

7. Electric drive motor according to one of claims 1 to 6, **characterised in that** each permanent magnet (10) has a convex magnet outer surface (10a) facing radially outwards, which forms at least a part of the surface wall (14) of the permanent-magnet rotor (7), which directly delimits the annular gap (6) of the drive motor (1) from the inside.

8. Electric drive motor according to one of claims 1 to 7, **characterised in that** each permanent magnet (10), on its respective convex magnet outer surface (10a), has a longitudinal groove (11) extending in an axial direction.

9. Electric drive motor according to one of claims 1 to 8, **characterised in that** one or more edges of each permanent magnet (10) is provided with a chamfer (16).

10. Household appliance, in particular a dishwasher, a washing machine, a dryer, an extractor hood or a household appliance pump (2), having an electric drive motor (1) according to one of claims 1 to 9.

## Revendications

1. Moteur d'entraînement électrique, comprenant un stator (3) comportant des pièces polaires et au moins un enroulement de stator (5) pouvant être commandé électriquement, et un rotor à aimants permanents (7) monté de façon à pouvoir être entraîné en rotation dans le champ de l'enroulement de stator (5) en ménageant une fente annulaire (6), lequel comprend un arbre de moteur (8) et un support d'aimants (9) fabriqué sous forme d'une pièce moulée par injection, qui siège sur l'arbre de moteur (8) et sur lequel une pluralité d'aimants permanents (10) séparés sont répartis sur la périphérie,
dans lequel le rotor à aimants permanents (7) comprend un dispositif de serrage (12), qui est configuré pour presser la pluralité d'aimants permanents (10) dans des directions radiales vers l'extérieur contre une paroi intérieure (13) d'une cavité d'un moule de moulage par injection (4) du support d'aimants (9) pendant le moulage par injection du support d'aimants (9), et qui comprend au moins deux parties de coque (12.1, 12.2), qui se complètent une fois juxtaposées dans la direction périphérique pour former un corps annulaire à deux ou plusieurs parties, qui forme une paroi d'enveloppe extérieure (14), contre laquelle la pluralité des aimants permanents (10) sont disposés à fleur,
dans lequel les au moins deux parties de coque (12.1, 12.2) sont configurées de façon à pouvoir être ajustées axialement l'une par rapport à l'autre, de telle sorte que lors d'un ajustement axial d'au moins une des au moins deux parties de coque (12.1, 12.2), toutes les parties de coque (12.1, 12.2) sont déplacées vers l'extérieur dans des directions radiales et ainsi la pluralité des aimants permanents (10) peuvent être pressés dans des directions radiales vers l'extérieur contre la paroi intérieure (13) de la cavité du moule de moulage par injection (4) du support d'aimants (9).

2. Moteur d'entraînement électrique selon la revendication 1, **caractérisé en ce que** le dispositif de serrage (12) forme une culasse magnétique refermant les champs magnétiques de la pluralité des aimants permanents (10).

3. Moteur d'entraînement électrique selon la revendication 1 ou 2, **caractérisé en ce que** chaque partie de coque (12.1, 12.2) comprend une forme de base s'étendant en forme d'arc de cercle autour d'une ligne de symétrie axiale, avec une paroi d'enveloppe extérieure (12a) convexe, en forme de secteur d'anneau circulaire, une paroi d'enveloppe intérieure (12b) concave, en forme de secteur d'anneau circulaire, et une première paroi d'extrémité (15a) orientée, dans la direction périphérique, dans le sens de rotation du rotor à aimants permanents (7) ainsi qu'une deuxième paroi d'extrémité (15b) orientée dans la direction périphérique dans le sens opposé au sens de rotation du rotor à aimants permanents (7), dans lequel la première paroi d'extrémité (15a) et la deuxième paroi d'extrémité (15b) sont situées respectivement dans un plan, qui est disposé obliquement, dans la direction de la ligne de symétrie axiale qui forme l'axe de rotation (D) du rotor à aimants permanents (7), selon un angle (w) incliné à la verticale de la ligne de symétrie axiale.

4. Moteur d'entraînement électrique selon la revendication 3, **caractérisé en ce que** l'angle (w) est entre 1 degré et 20 degrés, en particulier au moins en substance de 12 degrés.

5. Moteur d'entraînement électrique selon l'une des revendications 1 à 4, **caractérisé en ce que** le dispositif de serrage (12) ou chaque partie de coque (12.1, 12.2) est fabriqué(e) en acier au chrome ferritique.

6. Moteur d'entraînement électrique selon l'une des revendications 1 à 5, **caractérisé en ce que** chaque aimant permanent (10) comprend une surface extérieure d'aimant (10a) convexe tournée radialement vers l'extérieur et comprend une surface intérieure d'aimant (10b) opposée, concave tournée radialement vers l'intérieur, contre laquelle le dispositif de serrage (12) ou les parties de coque (12.1, 12.2) avec leurs parois d'enveloppe extérieures (14) sont disposées à fleur.

7. Moteur d'entraînement électrique selon l'une des revendications 1 à 6, **caractérisé en ce que** chaque aimant permanent (10) comprend une surface extérieure d'aimant (10a) convexe tournée radialement vers l'extérieur, qui forme au moins une partie de la paroi d'enveloppe (14) du rotor à aimants permanents (7), qui délimite directement de l'intérieur la fente annulaire (6) du moteur d'entraînement (1).

8. Moteur d'entraînement électrique selon l'une des revendications 1 à 7, **caractérisé en ce que** chaque aimant permanent (10) comprend une rainure (11) s'étendant longitudinalement en direction axiale sur sa surface extérieure d'aimant (10a) convexe respective.

9. Moteur d'entraînement électrique selon l'une des revendications 1 à 8, **caractérisé en ce qu'**un ou plusieurs bords de chaque aimant permanent (10) sont dotés d'un chanfrein (16).

10. Appareil électroménager, en particulier lave-vaisselle, lave-linge, sèche-linge, hotte aspirante ou pompe d'appareil électroménager (2), comprenant un moteur d'entraînement électrique (1) selon l'une des revendications 1 à 9.
